# EUROPEAN PATENT APPLICATION

(11) **EP 4 787 439 A1**
(43) Date of publication of application: **05.08.2026**
(21) Application number: 25812885.9
(22) Date of filing: 22.01.2025

(54) **ELECTROLYTE FOR LITHIUM-ION BATTERY, AND LITHIUM-ION BATTERY USING SAME**

(30) Priority: 11.12.2024 CN 202411827184
(71) Applicant: Eve Energy Co., Ltd., Huizhou, Guangdong 516000 (CN)
(72) Inventor: HUANG, Jiayuan, Huizhou, Guangdong 516000 (CN); JI, Yajuan, Huizhou, Guangdong 516000 (CN); XIE, Yingpeng, Huizhou, Guangdong 516000 (CN); ZHAO, Ruirui, Huizhou, Guangdong 516000 (CN)
(74) Representative: Michalski Hüttermann & Partner mbB
(86) International application number: PCT/CN2025/073821
(87) International publication number: WO 2026/123447

(57) **Abstract**

Provided herein is an electrolyte for lithium-ion batteries and a lithium-ion battery using the same. The electrolyte comprises a first additive present in an amount of 1.6 to 4.5% by mass of the electrolyte, and an organic solvent present in an amount of 80 to 85% by mass of the electrolyte. The first additive comprises fluoroether, hexafluorobenzene and vinylene carbonate in a mass ratio of fluoroether: hexafluorobenzene: vinylene carbonate = 0.1 to 1:1 to 2:0.5 to 1.5. The organic solvent comprises dimethoxyethane.

## Description

### CROSS REFERENCE TO RELATED APPLICATIONS

This application claims priority from a Chinese patent application filed with the China National Intellectual Property Administration (CNIPA) on 11 December 2024, application number 202411827184.9, and the entire contents of the above application are incorporated herein by reference.

### TECHNICAL FIELD

This application relates to the field of battery technology, specifically to an electrolyte for lithium-ion batteries and a lithium-ion battery using the same.

### BACKGROUND

The sustained prosperity of computers, communications, and consumer electronics has driven the rapid development of the lithium-ion battery industry. In particular, the rise of new energy vehicles in recent years has not only accelerated advancements in power lithium-ion batteries but also imposed higher demands for energy density and safety performance.

High-nickel ternary cathode materials and silicon-based anode materials are effective ways for lithium-ion batteries to achieve high energy density. However, lithium-ion batteries incorporating high-nickel/high-silicon systems have poor safety performance and are prone to thermal runaway during practical operation, which has become one of the main bottlenecks limiting their large-scale industrial application. By increasing the self-heating onset temperature and thermal runaway onset temperature of lithium-ion batteries, it is possible to effectively delay the onset of thermal runaway and reduce the probability of thermal runaway or prevent it from occurring.

### SUMMARY

### Objective problems

The electrolytes in the prior art do not perform satisfactorily in increasing the self-heating onset temperature and thermal runaway onset temperature of lithium-ion batteries, especially for lithium-ion batteries incorporating high-nickel ternary cathode materials and silicon-based anode materials.

### Technical Solutions

In a first aspect, the present invention provides an electrolyte for lithium-ion batteries, comprising:
a first additive present in an amount of 1.6 to 4.5% by mass of the electrolyte, and
an organic solvent present in an amount of 80 to 85% by mass of the electrolyte,
wherein the first additive comprises fluoroether, hexafluorobenzene and vinylene carbonate in a mass ratio of fluoroether: hexafluorobenzene: vinylene carbonate = 0.1 to 1:1 to 2:0.5 to 1.5; and
wherein the organic solvent comprises dimethoxyethane.

In a second aspect, the present invention provides a lithium-ion battery, comprising the aforementioned electrolyte for lithium-ion batteries.

### Advantages

The electrolyte for lithium-ion batteries provided in this application introduces fluoroether, hexafluorobenzene, and vinyl carbonate (VC) as the first additive, while employing dimethoxyethane (DME) as the organic solvent. The fluoroether (e.g. TTE) has strong polar C-H groups, and hexafluorobenzene exhibits excellent thermal stability. Introducing TTE, hexafluorobenzene, and VC into DME may offer the following advantages. First, the synergy among DME, TTE, and hexafluorobenzene establishes intermolecular anchoring via hydrogen bonding, simultaneously imparting high thermal stability to the electrolyte. This effectively reduces electron cloud density on oxygen atoms, substantially enhances the antioxidant capacity of the organic solvent, thereby mitigating oxygen release and heat generation from high-nickel ternary cathode materials and suppressing the heat generation from decomposition side reactions in the electrolyte. Consequently, it inhibits the occurrence of thermal runaway reactions in lithium-ion batteries, increases both the self-heating onset temperature and thermal runaway onset temperature, significantly reduces the probability of thermal runaway occurrence in batteries incorporating high-nickel ternary cathode materials, and substantially improves overall safety performance of lithium-ion batteries. Second, the introduction of VC promotes electrochemical reactions during initial charging/discharging of lithium-ion batteries, forming a solid electrolyte interphase (SEI) film on the anode surface. This effectively suppresses insertion of solvent molecules and prevents swelling of lithium-ion batteries, thus enhancing safety performance and reducing thermal runaway risks in silicon-based lithium-ion batteries.

Applying the proposed electrolyte to lithium-ion batteries incorporating high-nickel/high-silicon systems may effectively suppress the initiation of thermal runaway reactions. This simultaneously increases the self-heating onset temperature and thermal runaway onset temperature of the lithium-ion batteries, while significantly reducing the probability of thermal runaway occurrence in lithium-ion batteries incorporating high-nickel ternary cathode materials and silicon-based anodes, thereby substantially enhancing overall safety performance of lithium-ion batteries.

### DETAILED DESCRIPTION

In some embodiments, the first additive may be present in the electrolyte in an amount of 1.6%, 2.0%, 2.5%, 3.5%, 4.0%, or 4.5% by mass, and the organic solvent may be present in the electrolyte in an amount of 80%, 81%, 82%, 83%, 84%, or 85% by mass. The mass ratio of fluoroether, hexafluorobenzene, vinylene carbonate may be, but is not limited to, 0.1:1:0.5, 0.5:1.5:1, 1:2:1.5, 0.1:2:1.5, 1:1:0.5. All values within the ranges, whether specifically enumerated or not, are expressly encompassed.

In some embodiments, the fluoroether comprises at least one of 1,1,2,2-tetrafluoroethyl-2,2,3,3-tetrafluoropropyl ether, 2,2,2-trifluoroethyl ether, and hexafluoroisopropyl methyl ether.

In some embodiments, the electrolyte further comprises a second additive present in an amount of 0.1 to 1% by mass of the electrolyte. For example, the mass fraction of the second additive in the electrolyte may be, but is not limited to, 0.1%, 0.2%, 0.3%, 0.4%, 0.5%, 0.6%, 0.7%, 0.8%, 0.9%, or 1%. All values within the ranges, whether specifically enumerated or not, are expressly encompassed. The second additive comprises at least one of lithium difluoro(oxalato)borate (LiDFOB) and lithium bis(oxalate)borate (LiBOB).

This scheme advantageously reduces the impedance of lithium-ion batteries and improves their high-temperature cycle life by introducing the second additive LiDFOB and/or LiBOB into the electrolyte and applying it to lithium-ion batteries.

In some embodiments, the electrolyte further comprises a lithium salt present in an amount of 10 to 20% by mass of the electrolyte. The lithium salt comprises at least one of lithium hexafluorophosphate (LiPF₆), lithium bis(fluorosulfonyl)imide (LiFSI), and lithium bis(trifluoromethanesulfonyl)imide (LiTFSI).

In some embodiments, the lithium salt is a mixture of lithium hexafluorophosphate (LiPF₆) and lithium bis(fluorosulfonyl)imide (LiFSI) in a mass ratio of 9 to 15:1 to 5. For example, the mass ratio of LiPF₆ to LiFSI may be, but is not limited to, 9:1, 12:3, 15:5, 9:5, 15:1, 12:1, 12:3, or 12:5. All values within the ranges, whether specifically enumerated or not, are expressly encompassed.

This scheme employs LiPF₆ and LiFSI mixed at the specified mass ratio as lithium salts in the electrolyte. This formulation exhibits good thermal stability and moisture insensitivity, effectively reducing side reactions between the electrolyte and both electrodes while increasing the decomposition temperature of the electrolyte. This enhances the safety of the electrolyte while improving the high-temperature cycling performance of lithium-ion batteries using this electrolyte, mitigates the risk of thermal runaway in lithium-ion batteries during practical operation, and improves the safety performance of lithium-ion batteries.

In some embodiments, the aforementioned organic solvent further comprises a cyclic carbonate solvent and a linear carbonate solvent. The cyclic carbonate solvent comprises at least one of ethylene carbonate (EC), propylene carbonate (PC), and fluoroethylene carbonate (FEC). The linear carbonate solvent comprises at least one of ethyl methyl carbonate (EMC) and dimethyl carbonate (DMC).

In some embodiments, the aforementioned organic solvent comprises propylene carbonate, fluoroethylene carbonate, and dimethyl carbonate. A mass ratio of dimethoxyethane: propylene carbonate: fluoroethylene carbonate: dimethyl carbonate may be in a range of 20 to 30: 10 to 22.5: 5 to 15: 25 to 36. For example, the mass ratio of dimethoxyethane: propylene carbonate: fluoroethylene carbonate: dimethyl carbonate may be, but is not limited to, 20:10:5:25, 25:16:10:31, 30:22.5:15:36, 20:17:10:25. All values within the ranges, whether specifically enumerated or not, are expressly encompassed.

Ethylene carbonate (EC) exacerbates oxygen-release reactions and heat generation in high-nickel ternary cathodes, leading to thermal runaway in lithium-ion batteries. Compared to ethylene carbonate (EC), propylene carbonate (PC) exhibits superior thermal stability and increases both self-heating onset and thermal runaway onset temperatures, and mitigates heat generation caused by oxygen-release in the cathode.

In this scheme, propylene carbonate (PC), fluoroethylene carbonate (FEC), and dimethyl carbonate (DMC) are mixed at the specified mass ratio and used as organic solvents in the electrolyte. The hexafluorobenzene in the electrolyte exerts a synergistic effect with PC, FEC, and DMC in the electrolyte, reducing the impedance of lithium-ion batteries using this electrolyte, and thereby improving the cycling stability of the lithium-ion batteries.

In some embodiments, the lithium-ion battery further comprises a cathode electrode sheet, which comprises a cathode current collector and a cathode active coating disposed on at least one surface of the cathode current collector. The cathode active coating comprises a ternary cathode material LiNiₓCo_{y}M_{1-x-y}O₂, where 0.6 ≤ x < 1, 0 < y < 0.4, and M is one selected from Mn and Al. For example, x may be, but is not limited to, 0.6, 0.7, 0.8, 0.9, and y may be, but is not limited to, 0.1, 0.2, 0.3. All values within the ranges, whether specifically enumerated or not, are expressly encompassed.

In some embodiments, the lithium-ion battery further comprises an anode electrode sheet, which comprises an anode current collector and an anode active coating disposed on at least one surface of the anode current collector. The anode active coating comprises silicon-carbon material.

In some embodiments, the silicon-carbon material comprises 5 to 30 wt% silicon. For example, the silicon-carbon material may comprise 5%, 10%, 15%, 20%, 25%, or 30% silicon. All values within the ranges, whether specifically enumerated or not, are expressly encompassed.

### EXAMPLES

### Examples 1 to 3 and Comparative Examples 1 to 4

Examples 1 to 3 and Comparative Examples 1 to 4 provide lithium-ion batteries prepared by the following procedure.

### 1. Preparation of a cathode electrode sheet

A ternary cathode material LiNi_{0.8}Co_{0.1}Mn_{0.1}O₂, a binder polyvinylidene fluoride (PVDF), and a conductive agent acetylene black were mixed in a mass ratio of 98.5:1.3:0.2 and added to the solvent N-methyl-2-pyrrolidone (NMP). After mixing thoroughly, a cathode slurry with a solid content of 45% was obtained. The cathode slurry was coated onto both surfaces of the cathode current collector aluminium foil having a thickness of 12 µm to form cathode active coatings. After vacuum drying, a cathode electrode sheet with a compacted density of 1.4 g/cm³ was obtained.

### 2. Preparation of an anode electrode sheet

Silicon-carbon material (with 20 wt% silicon content), a binder sodium carboxymethyl cellulose (CMC), and a conductive agent conductive carbon black (SP) were mixed in a mass ratio of 96:3:1, and added to the solvent deionized water. After mixing thoroughly, an anode slurry with a solid content of 45% was obtained. The anode slurry was coated onto both surfaces of the anode current collector copper foil having a thickness of 6 µm to form anode active coatings. After vacuum drying, an anode sheet was obtained.

### 3. Preparation of a separator

A polyethylene (PE) membrane with a ceramic layer was used as the separator (total thickness of the separator was 12 µm).

### 4. Preparation of an electrolyte

The specific composition of the electrolyte are shown in Table 1. The electrolyte was prepared through the following steps. A lithium salt was dissolved in an organic solvent to prepare a lithium salt solution. A first additive and a second additive were added to the lithium salt solution. After mixing thoroughly, an electrolyte was obtained. In this process, TTE referred to 1,1,2,2-tetrafluoroethyl-2,2,3,3-tetrafluoropropyl ether, and THF referred to tetrahydrofuran.

**Table 1 Specific composition of the electrolyte for lithium-ion batteries in Examples 1 to 3 and Comparative Examples 1 to 4**

| | | Ex. 1 | Ex.2 | Ex.3 | Comp. Ex.1 | Comp. Ex.2 | Comp. Ex.3 | Comp. Ex.4 |
|---|---|---|---|---|---|---|---|---|
| First additive (wt%) | TTE | 0.5% | 0.1% | 1% | 2% | 0.5% | 0.5% | 0.5% |
| | hexafluoro benzene | 1.5% | 2% | 1% | - | 2.5% | - | 1.5% |
| | VC | 1% | 0.5% | 1.5% | 1% | - | 2.5% | 1% |
| Second additive (wt%) | LiDFOB | 0.5% | 1% | 0.1% | | 0.5% | 0.5% | 0.5% |
| | LiBOB | - | - | - | - | - | - | - |
| Organic solvent (wt%) | DME | 25% | 20% | 30% | - | 25% | 25% | - |
| | THF | - | - | - | - | - | - | - |
| | PC | 16% | 21.5% | 10% | 16% | 16% | 16% | 16% |
| | EC | - | - | - | - | - | - | - |
| | FEC | 10% | 5% | 15% | 10% | 10% | 10% | 10% |
| | DMC | 30.5% | 35.9% | 25.4% | 59% | 30.5% | 30.5% | 30.5% |
| | EMC | - | - | - | - | - | - | 25% |
| Lithium salt (wt%) | LiPF₆ | 12% | 9% | 15% | 12% | 12% | 12% | 12% |
| | LiFSI | 3% | 5% | 1% | - | 3% | 3% | 3% |
| | LiTFSI | - | - | - | - | - | - | - |

### 5. Assembly and formation of lithium-ion batteries

The cathode electrode sheet, separator, and anode electrode sheet were stacked sequentially, with the separator interposed between the cathode and anode electrode sheets to serve as an insulator. The stack was then wound into a jelly-roll structure, which was placed in an outer casing. After drying, the electrolyte was injected, followed by vacuum sealing, aging, formation, and grading processes to produce a lithium-ion battery.

### Comparative Examples 5 to 10

Comparative Examples 5 to 10 provide lithium-ion batteries that differ from Example 1 in the composition of the electrolyte, as shown in Table 2.

**Table 2 Specific composition of the electrolyte for lithium-ion batteries in Example 1 and Comparative Examples 5 to 10**

| | | Ex.1 | Ex.5 | Ex.6 | Comp. Ex.7 | Comp. Ex.8 | Comp. Ex.9 | Comp. Ex.10 |
|---|---|---|---|---|---|---|---|---|
| First additive (wt%) | TTE | 0.5% | 0.5% | 0.5% | 0.5% | 0.5% | 0.5% | 0.5% |
| | hexafluoro benzene | 1.5% | 0.5% | 2.5% | 2.3% | 0.8% | 1.5% | 1.5% |
| | VC | 1% | 0.3% | 2% | 0.2% | 1.7% | 1% | 1% |
| Second additive (wt%) | LiDFOB | 0.5% | 0.5% | 0.5% | 0.5% | 0.5% | 0.5% | 0.5% |
| | LiBOB | - | - | - | - | - | - | - |
| Organic solvent (wt%) | DME | 25% | 25% | 25% | 25% | 25% | 17% | 35% |
| | PC | 16% | 16% | 16% | 16% | 16% | 20% | 10% |
| | EC | - | - | - | - | - | - | - |
| | FEC | 10% | 10% | 10% | 10% | 10% | 10% | 10% |
| | DMC | 30.5% | 32.2% | 28.5% | 30.5% | 30.5% | 34.5% | 26.5% |
| | EMC | - | - | - | - | - | - | - |
| Lithium salt (wt%) | LiPF₆ | 12% | 12% | 12% | 12% | 12% | 12% | 12% |
| | LiFSI | 3% | 3% | 3% | 3% | 3% | 3% | 3% |
| | LiTFSI | - | - | - | - | - | - | - |

Except for the above differences, the materials, formulation ratios, and preparation procedures used in Comparative Examples 5 to 10 were strictly consistent with those in Example 1.

### Examples 4 to 10

Examples 4 to 10 provide lithium-ion batteries that differ from Example 1 in the composition of the electrolyte, as shown in Table 3.

**Table 3 Specific composition of the electrolyte for lithium-ion batteries in Example 1 and Examples 4 to 10**

| | | Ex.1 | Ex.4 | Ex.5 | Ex.6 | Ex.7 | Ex.8 | Ex.9 | Ex.10 |
|---|---|---|---|---|---|---|---|---|---|
| First additive (wt%) | TTE | 0.5% | 0.5% | 0.5% | 0.5% | 0.5% | 0.5% | 0.5% | 0.5% |
| | Hexafluo robenzen e | 1.5% | 1.5% | 1.5% | 1.5% | 1.5% | 1.5% | 1.5% | 1.5% |
| | VC | 1% | 1% | 1% | 1% | 1% | 1% | 1% | 1% |
| Second additive (wt%) | LiDFOB | 0.5% | 0.05% | 1.5% | - | 0.5% | 0.5% | 0.5% | 0.5% |
| | LiBOB | - | - | - | 0.5% | - | - | - | - |
| Organic solvent (wt%) | DME | 25% | 25% | 25% | 25% | 25% | 25% | 25% | 25% |
| | THF | - | - | - | - | - | - | - | - |
| | PC | 16% | 16% | 16% | 16% | 21.5% | 11% | 16% | 16% |
| | EC | - | - | - | - | - | - | - | - |
| | FEC | 10% | 10% | 10% | 10% | 10% | 10% | 10% | 10% |
| | DMC | 30.5% | 30.95% | 29.5% | 30.5% | 34.5% | 25.5% | 30.5% | 30.5% |
| | EMC | - | - | - | - | - | - | - | - |
| Lithium salt (wt%) | LiPF₆ | 12% | 12% | 12% | 12% | 5% | 18% | 15% | - |
| | LiFSI | 3% | 3% | 3% | 3% | 0.5% | 7% | - | 3% |
| | LiTFSI | - | - | - | - | - | - | - | 12% |

Except for the above differences, the materials, formulation ratios, and preparation procedures used in Examples 4 to 10 were strictly consistent with those in Example 1.

### Comparative Example 11 and Example 11

Example 11 and Comparative Example 11 provide lithium-ion batteries that differ from Example 1 in the composition of the electrolyte, as shown in Table 4.

**Table 4 Specific composition of the electrolyte for the lithium-ion batteries in Example 1, Comparative Example 11, and Example 11**

| | | Ex.1 | Comp. Ex.11 | Ex.11 |
|---|---|---|---|---|
| First additive (wt%) | TTE | 0.5% | 0.5% | 0.5% |
| | hexafluorobenzene | 1.5% | 1.5% | 1.5% |
| | VC | 1% | 1% | 1% |
| Second additive (wt%) | LiDFOB | 0.5% | 0.5% | 0.5% |
| | LiBOB | - | - | - |
| Organic solvent (wt%) | DME | 25% | - | 25% |
| | THF | - | 25% | |
| | PC | 16% | 16% | 16% |
| | EC | - | - | - |
| | FEC | 10% | 10% | 10% |
| | DMC | 30.5% | 30.5% | - |
| | EMC | - | - | 30.5% |
| Lithium salt (wt%) | LiPF₆ | 12% | 12% | 12% |
| | LiFSI | 3% | 3% | 3% |
| | LiTFSI | - | - | - |

Except for the above differences, the materials, formulation ratios, and preparation procedures used in Comparative Example 11 and Example 11 were strictly consistent with those in Example 1.

### Test Example

### 1. Test subject

The lithium-ion batteries prepared according to Examples 1 to 11 and Comparative Examples 1 to 11 were subjected to performance tests.

### 2. Test protocols

### (1) Fixture-free thermal abuse test at 150°C for 0.5h - thermal runaway time and temperature monitoring

Fully charged lithium-ion batteries (100% SOC) were placed in a thermal chamber. The temperature was ramped from room temperature to 150±2°C at a rate of 5°C/min, and maintained for 30 minutes, then heating ceased. Post-heating observation continued for 1 hour. Two parallel experiments were conducted for each Example and Comparative Example to observe whether ignition occurs in the lithium-ion battery while simultaneously recording the battery's temperature changes, including thermal runaway T₂ delay time, thermal runaway trigger temperature T₂, and thermal runaway peak temperature T₃. The thermal runaway T₂ delay time for Comparative Example 1 refers to the heating duration required to reach the thermal runaway onset temperature during the heating process. For Examples 1 to 11 and Comparative Examples 2 to 11, the thermal runaway T₂ delay time was defined relative to Comparative Example 1, calculated by subtracting the heating duration required to reach the thermal runaway onset temperature of Comparative Example 1 from the heating duration required to reach the thermal runaway onset temperature of Examples 1 to 11 and Comparative Examples 2 to 11. Thermal runaway trigger temperature T₂ refers to temperature rise rate exceeding 1°C/min, and thermal runaway peak temperature T₃ refers to the maximum temperature during thermal runaway.

### (2) Accelerating rate calorimeter (ARC) thermal runaway test

The accelerating rate calorimeter (ARC) operates by providing a quasi-adiabatic environment and utilizing a Heat-Wait-Seek (HWS) protocol to stepwise heat the lithium-ion batteries, simulating the thermal runaway process of the battery under conditions where there is no heat exchange between the battery and the environment.

Fully charged lithium-ion batteries (100% SOC) were placed in the calorimetric chamber of the ARC under a nitrogen atmosphere, enabling the recording of temperature changes in the battery under adiabatic conditions, including self-heating onset temperature T₁, thermal runaway onset temperature T₂, and the maximum temperature Tₘₐₓ. The three characteristic temperatures of lithium-ion battery thermal runaway comprises: self-heating onset temperature T₁ - temperature rise rate exceeding 0.01°C/min; thermal runaway trigger/onset temperature T₂ - temperature rise rate exceeding 1°C/min; thermal runaway maximum temperature Tₘₐₓ.

### 3. Experimental results

**Table 5 Results of fixture-free thermal abuse test at 150°C for 0.5h - thermal runaway time and temperature monitoring**

| | Fixture-free test at 150°C for 0.5h | Thermal runaway T₂ delay time | Thermal runaway T₂ trigger temperature | Thermal runaway peak temperature T₃ |
|---|---|---|---|---|
| Ex.1 | 2PCS/2PCS ignition | (1) 25min | (1) 178°C | (1) 385°C |
| | | (2) 28min | (2) 180°C | (2) 355°C |
| Ex.2 | 2PCS/2PCS ignition | (1) 23min | (1) 175°C | (1) 390°C |
| | | (2) 25min | (2) 177°C | (2) 300°C |
| Ex.3 | 2PCS/2PCS ignition | (1) 20min | (1) 173°C | (1) 395°C |
| | | (2) 24min | (2) 176°C | (2) 355°C |
| Ex.4 | 2PCS/2PCS ignition | (1) 18min | (1) 169°C | (1) 415°C |
| | | (2) 19min | (2) 172°C | (2) 400°C |
| Ex.5 | 2PCS/2PCS ignition | (1) 17min | (1) 170°C | (1) 400°C |
| | | (2) 18min | (2) 174°C | (2) 382°C |
| Ex.6 | 2PCS/2PCS ignition | (1) 17min | (1) 167°C | (1) 416°C |
| | | (2) 16min | (2) 170°C | (2) 419°C |
| Ex.7 | 2PCS/2PCS ignition | (1) 15min | (1) 165°C | (1) 435°C |
| | | (2) 15min | (2) 167°C | (2) 442°C |
| Ex.8 | 2PCS/2PCS ignition | (1) 14min | (1) 169°C | (1) 420°C |
| | | (2) 13min | (2) 168°C | (2) 422°C |
| Ex.9 | 2PCS/2PCS ignition | (1) 10min | (1) 162.5°C | (1) 557°C |
| | | (2) 11min | (2) 164.8°C | (2) 585°C |
| Ex.10 | 2PCS/2PCS ignition | (1) 11min | (1) 162°C | (1) 536°C |
| | | (2) 13min | (2) 165°C | (2) 524°C |
| Ex.11 | 2PCS/2PCS ignition | (1) 12min | (1) 162°C | (1) 600°C |
| | | (2) 12min | (2) 164°C | (2) 600°C |
| Comp. Ex.1 | 2PCS/2PCS ignition | (1) 6min | (1) 145°C | (1) 701°C |
| | | (2) 7min | (2) 144°C | (2) 703°C |
| Comp. Ex.2 | 2PCS/2PCS ignition | (1) 9min | (1) 155°C | (1) 667°C |
| | | (2) 10min | (2) 158°C | (2) 650°C |
| Comp. Ex.3 | 2PCS/2PCS ignition | (1) 7min | (1) 148°C | (1) 684°C |
| | | (2) 8min | (2) 150°C | (2) 673°C |
| Comp. Ex.4 | 2PCS/2PCS ignition | (1) 8min | (1) 150°C | (1) 681°C |
| | | (2) 9min | (2) 153°C | (2) 672°C |
| Comp. Ex.5 | 2PCS/2PCS ignition | (1) 7min | (1) 147°C | (1) 594°C |
| | | (2) 8min | (2) 146°C | (2) 608°C |
| Comp. Ex.6 | 2PCS/2PCS ignition | (1) 8min | (1) 149°C | (1) 616°C |
| | | (2) 9min | (2) 150°C | (2) 619°C |
| Comp. Ex.7 | 2PCS/2PCS ignition | (1) 10min | (1) 155°C | (1) 608°C |
| | | (2) 11min | (2) 156°C | (2) 612°C |
| Comp. Ex.8 | 2PCS/2PCS ignition | (1) 10min | (1) 153°C | (1) 568°C |
| | | (2) 10min | (2) 155°C | (2) 573°C |
| Comp. Ex.9 | 2PCS/2PCS ignition | (1) 5min | (1) 141°C | (1) 610°C |
| | | (2) 6min | (2) 144°C | (2) 619°C |
| Comp. Ex.10 | 2PCS/2PCS ignition | (1) 2min | (1) 131°C | (1) 730°C |
| | | (2) 3min | (2) 133°C | (2) 726°C |
| Comp. Ex.11 | 2PCS/2PCS ignition | (1) 11min | (1) 155°C | (1) 640°C |
| | | (2) 11min | (2) 154°C | (2) 631°C |

**Table 6 Results of ARC thermal runaway test for lithium-ion batteries**

| | Self-heating onset temperature T₁ (°C) | Thermal runaway onset temperature T₂ (°C) | Maximum temperature Tₘₐₓ (°C) |
|---|---|---|---|
| Ex.1 | 139 | 158 | 338 |
| Ex.2 | 135 | 155 | 343 |
| Ex.3 | 136 | 154 | 340 |
| Ex.4 | 132 | 150 | 341 |
| Ex.5 | 133 | 152 | 345 |
| Ex.6 | 130 | 149 | 339 |
| Ex.7 | 127 | 147 | 342 |
| Ex.8 | 128 | 146 | 345 |
| Ex.9 | 123 | 142 | 345 |
| Ex.10 | 125 | 144 | 349 |
| Ex.11 | 120 | 141 | 356 |
| Comp. Ex.1 | 116 | 134 | 411 |
| Comp. Ex.2 | 117 | 135 | 428 |
| Comp. Ex.3 | 115 | 133 | 417 |
| Comp. Ex.4 | 114 | 136 | 420 |
| Comp. Ex.5 | 119 | 137 | 392 |
| Comp. Ex.6 | 118 | 138 | 401 |
| Comp. Ex.7 | 119 | 139 | 389 |
| Comp. Ex.8 | 120 | 140 | 390 |
| Comp. Ex.9 | 109 | 131 | 502 |
| Comp. Ex.10 | 107 | 129 | 530 |
| Comp. Ex.11 | 108 | 130 | 513 |

The results of fixture-free thermal abuse test at 150°C for 0.5h - thermal runaway time and temperature monitoring for the lithium-ion batteries in Examples 1 to 11 and Comparative Examples 1 to 11 are shown in Table 5. The results of ARC thermal runaway test for lithium-ion batteries in Examples 1 to 11 and Comparative Examples 1 to 11 are shown in Table 6. In Table 5, the notation '2PCS/2PCS ignition' indicates that the latter 2PCS refers to a total of two pieces of lithium-ion batteries, while the former 2PCS refers to two pieces of lithium-ion batteries experiencing ignition.

From the temperature-rise curves during the 150°C thermal chamber test, lithium-ion batteries provided in Examples 1 to 3 delay reaching the thermal runaway trigger temperature T₂ by approximately 13 to 22 minutes, elevate the thermal runaway trigger temperature T₂ by 10 to 45°C, and significantly reduce the T₃ temperature by approximately 300°C, compared with Comparative Example 1. ARC test for thermal runaway temperatures (T₁/T₂/Tₘₐₓ) reveals that lithium-ion batteries provided in Examples 1 to 3 elevate the self-heating onset temperature T₁ by 19 to 20°C and elevate the thermal runaway trigger temperature T₂ by 20 to 24°C, compared with Comparative Example 1. These results indicate that the lithium-ion batteries provided in Examples 1 to 3 delay thermal runaway onset and reduce the probability of thermal runaway occurrence, thereby improving the safety of lithium-ion batteries.

Compared with Example 1, the electrolyte in the lithium-ion battery provided in Comparative Example 2 contains no VC, the electrolyte in the lithium-ion battery provided in Comparative Example 3 contains no hexafluorobenzene, the electrolyte in the lithium-ion battery provided in Comparative Example 4 contains no DME, the electrolyte in the lithium-ion batteries provided in Comparative Examples 5 and 6 has a mass fraction of the first additive that falls outside the range of 1.5 to 3.5%, and the electrolyte in the lithium-ion batteries provided in Comparative Examples 7 and 8 has a mass fraction of the first additive that falls within the range of 1.5 to 3.5% but the mass ratio of hexafluorobenzene to vinyl carbonate falls outside the range of 1 to 2:0.5 to 1.5. The test results show that the lithium-ion batteries provided in Comparative Examples 2 to 8 exhibit shorter thermal runaway T₂ delay times and lower thermal runaway trigger temperatures T₂ versus Example 1 in 150°C thermal chamber tests, with higher thermal runaway peak temperatures T₃ than Example 1. However, during ARC thermal runaway test, these comparative batteries demonstrate lower self-heating onset temperatures T₁ and lower thermal runaway onset temperatures T₂ than Example 1, with higher maximum temperatures Tₘₐₓ than Example 1.

Compared with Example 1, the electrolytes in the lithium-ion batteries provided in Examples 4 and 5 contain a second additive at a concentration that falls outside the range of 0.1 to 1%, and the electrolytes in the lithium-ion batteries provided in Examples 7 and 8 contain a lithium salt at a concentration that falls outside the range of 10 to 20%. The test results show that the lithium-ion batteries provided in Comparative Examples 2 to 8 exhibit shorter thermal runaway T₂ delay times and lower thermal runaway trigger temperatures T₂ versus Example 1 in 150°C thermal chamber tests, with higher thermal runaway peak temperatures T₃ than Example 1. However, during ARC thermal runaway test, these comparative batteries demonstrate lower self-heating onset temperatures T₁ and lower thermal runaway onset temperatures T₂ than Example 1, with higher maximum temperatures Tₘₐₓ than Example 1.

## Claims

1. An electrolyte for lithium-ion batteries, comprising
a first additive present in an amount of 1.6 to 4.5% by mass of the electrolyte, and
an organic solvent present in an amount of 80 to 85% by mass of the electrolyte,
wherein the first additive comprises fluoroether, hexafluorobenzene and vinylene carbonate in a mass ratio of fluoroether: hexafluorobenzene: vinylene carbonate = 0.1 to 1:1 to 2:0.5 to 1.5; and
wherein the organic solvent comprises dimethoxyethane.

2. The electrolyte for lithium-ion batteries according to claim 1, wherein the fluoroether comprises at least one of 1,1,2,2-tetrafluoroethyl-2,2,3,3-tetrafluoropropyl ether, 2,2,2-trifluoroethyl ether, and hexafluoroisopropyl methyl ether.

3. The electrolyte for lithium-ion batteries according to claim 1,
wherein the electrolyte further comprises a second additive present in an amount of 0.1 to 1% by mass of the electrolyte, and
wherein the second additive comprises at least one of lithium difluoro(oxalato)borate and lithium bis(oxalate)borate.

4. The electrolyte for lithium-ion batteries according to claim 1,
wherein the electrolyte further comprises a lithium salt present in an amount of 10 to 20% by mass of the electrolyte; and
wherein the lithium salt comprises at least one of lithium hexafluorophosphate, lithium bis(fluorosulfonyl)imide, and lithium bis(trifluoromethanesulfonyl)imide.

5. The electrolyte for lithium-ion batteries according to claim 4, wherein the lithium salt is a mixture of lithium hexafluorophosphate and lithium bis(fluorosulfonyl)imide in a mass ratio of 9 to 15:1 to 5.

6. The electrolyte for lithium-ion batteries according to claim 1,
wherein the organic solvent further comprises a cyclic carbonate solvent and a linear carbonate solvent;
wherein the cyclic carbonate solvent comprises at least one of ethylene carbonate, propylene carbonate, and fluoroethylene carbonate; and
wherein the linear carbonate solvent comprises at least one of ethyl methyl carbonate and dimethyl carbonate.

7. The electrolyte for lithium-ion batteries according to claim 6,
wherein the organic solvent comprises propylene carbonate, fluoroethylene carbonate, and dimethyl carbonate, and
wherein a mass ratio of dimethoxyethane: propylene carbonate: fluoroethylene carbonate: dimethyl carbonate is in a range of 20 to 30: 10 to 22.5: 5 to 15: 25 to 36.

8. A lithium-ion battery, comprising the electrolyte for lithium-ion batteries according to any one of claims 1 to 7.

9. The lithium-ion battery according to claim 8, further comprising a cathode electrode sheet, the cathode electrode sheet comprising a cathode current collector and a cathode active coating disposed on at least one surface of the cathode current collector,
wherein the cathode active coating comprises a ternary cathode material LiNiₓCo_{y}M_{1-x-y}O₂, where 0.6 ≤ x < 1, 0 < y < 0.4, and M is one selected from Mn and Al.

10. The lithium-ion battery according to claim 8, further comprising an anode electrode sheet, the anode electrode sheet comprising an anode current collector and an anode active coating disposed on at least one surface of the anode current collector,
wherein the anode active coating comprises silicon-carbon material.

11. The lithium-ion battery according to claim 10, wherein the silicon-carbon material comprises 5 to 30 wt% silicon.
